# EUROPEAN PATENT SPECIFICATION

(11) **EP 1 435 181 B1**
(45) Date of publication and mention of the grant of the patent: **22.12.2010**
(21) Application number: 01979111.0
(22) Date of filing: 10.10.2001
(51) Int. Cl.: H04Q 3/00

(54) **METHOD AND COMPUTER PROGRAM FOR ACCESSING AN INTELLIGENT NETWORK SERVICE**
VERFAHREN UND COMPUTERPROGRAMM ZUM ZUGRIFF AUF EIN INTELLIGENTES NETZ
PROCEDE ET PROGRAMME D'ORDINATEUR PERMETTANT D'ACCEDER A UN SERVICE DE RESEAU INTELLIGENT

(43) Date of publication of application: 07.07.2004
(73) Proprietor: Telefonaktiebolaget LM Ericsson (publ), 164 83 Stockholm (SE)
(72) Inventor: BOT, Jan, NL-4255 GV Nieuwendijk (NL); ZUURVELD, Marco, NL-5121 NH Rijen (NL); VERMEER, Richard, NL-4811 ZT Breda (NL)
(74) Representative: Tonscheidt, Andreas
(86) International application number: PCT/NL2001/000746
(87) International publication number: WO 2003/032656

(56) References cited:
- EP-A- 1 011 274
- WO-A-98/53626
- BECHER R ET AL: "CAMEL: THE IMPACT OF PERSONAL COMMUNICATIONS ON INTELLIGENT NETWORKS" ISS '97. WORLD TELECOMMUNICATIONS CONGRESS. GLOBAL NETWORK EVOLUTION: CONVERGENCE OR COLLISION? , vol. 2, 21 - 26 September 1997, pages 225-233, XP000704472 TORONTO, CA
- ANDERSON G ET AL: "IN GOES MOBILE" ISS '97. WORLD TELECOMMUNICATIONS CONGRESS. GLOBAL NETWORK EVOLUTION: CONVERGENCE OR COLLISION? , vol. 2, 21 - 26 September 1997, pages 209-213, XP000704470 TORONTO, CA
- SMITH D G: "AN INTRODUCTION TO GSM ENHANCEMENTS FOR OPERATOR SPECIFIC SERVICES (CAMEL)" IEE COLLOQUIUM ON MOBILE COMMUNICATIONS TOWARDS THE NEXT MILLENIUM AND BEYOND, IEE, 17 May 1996 (1996-05-17), pages 6-1-6-9, XP000605991 LONDON, GB

## Description

The invention relates to a method for accessing an intelligent network (IN) service implemented in a first telecommunication network by a terminal, which roams in a second telecommunication network which is coupled to the first network, the terminal being subscribed to the first network, the first and the second network comprising respectively a first and a second service switching function (SSF) for performing switching operations in respectively the first and the second network, the first network further comprising a home location register (HLR) for storing subscription data related to the terminal and a first service control function (SCF) providing at least part of the IN service, the second network further comprising a visitor location register (VLR) for storing subscription data related to the terminal when roaming in the second network. Further, the invention relates to a computer program comprising a set of computer programs each comprising program instructions causing a second SCF in the first network and the second SSF in the second network, in co-operation with each other, to perform the method according to the invention.

IN services, such as voice mail routing service, pre-paid service and mobile virtual private network (MVPN) service have become a major success in the past years, in particular in mobile telecommunication networks. The IN services provide a high degree of user convenience as they enable to perform operations such as contacting voice mail, increasing a credit of a pre-paid account, or dialing a number in a MVPN via a simple operation, such as dialing a short number. A problem encountered however, is that the IN services are normally only available from a home-network on which a particular terminal has been subscribed. When the terminal roams to another network, such as a network in another country or a network which is operated by another operator, the ease of use, provided in the home network cannot be provided. Various work-arounds are known, such as contacting a voice mail-box from another network by dialing a long number instead of a short number, or setting up a call for a user with a pre-paid terminal by setting up a first telephone call from the home network to the pre-paid terminal, and a second telephone call from the home network to a destination extension. Further, the fact that each telephone network makes use of different short numbers for accessing various IN services plays a role in the problems associated with accessing IN services from a network, other than the home network of a terminal. Recently, a standard, being a customised application for mobile network enhanced logic (CAMEL) standard has been prepared, and a phase I of the CAMEL standard is implemented in some of mobile telecommunication networks at this moment. CAMEL phase I however provides only in a standardisation of a message sent from a network in which the terminal is present, to the home network. This standardisation does provide a first step towards access of IN services from another network, as however only the message sent from the visiting network towards the home network is standardised, no working solution is provided with this standard.

Such a system is disclosed in the document of BECHER R. ET AL: "CAMEL: THE IMPACT OF PERSONAL COMMUNICATIONS ON INTELLIGENT NETWORKS" ISS'97. WORLD TELECOMMUNICATIONS CONGRESS. GLOBAL NETWORK EVOLUTION: CONVERGENCE OR COLLISION? , vol. 2, 21 - 26 September 1997, pages 225-233, TORONTO, CA.

The invention intends to provide access to an IN service in an advantageous way for a terminal subscribed to one network roaming in another network.

To achieve this and other goals, the method according to the invention comprises the steps of, initiated by an IN service request number sent from the terminal and received in the second SSF in the second network, the number indicating a request for accessing the IN service, sending an IN service request detect message from the second SSF to a second SCF in the first network, based on the number, sending a redirect message from the second SCF to the second SSF, the redirect message comprising a command to establish a connection and a destination number associated with the IN service to be accessed, accessing the IN service from the second SCF by dialing an access number, comprising the destination number. This enables the second telecommunication network to provide access to an IN service implemented in the first telecommunication network, as the second SSF receives a message comprising a command to establish a connection, as well as a destination number associated with the IN service to be accessed, upon request of the second SSF by sending a detect message. As the IN service is accessed from the second SSF by dialing an access number, no special protocols or messages are required, as a dialing of a number is a standard function in any telecommunication network.

Advantageously, the destination number comprises a prefix to the number sent from the terminal. In this manner no special requirements are put on the second SSF for determining the access number, as dialing a number comprising a prefix is a standard function of a SSF.

Advantageously, the access number is the destination number, and the method further comprises the step of coupling in the second SCF the prefix to the number sent from the terminal, the detect message further comprising the number sent from the terminal. In this manner, the addition of an appropriate prefix is performed in the second SCF, and thus in the same network in which the IN service to be accessed is residing. In this manner, implementation as well as maintenance of a service making use of the method according to the invention is easy, as the IN service to be accessed as well as a determination of the prefix is located in the same network.

Advantageously, the method comprises the further step of prior to accessing the IN service, sending a message from the HLR in the first network to the VLR in the second network, the message comprising a subscriber IN service access information. As the subscriber IN service access information provides data to determine whether or not a particular subscriber (and thus a particular terminal) has access to the IN service, the second network comprises in this manner data to determine whether or not a particular terminal is allowed to access the IN service in the first network.

Advantageously, the subscriber IN service access information comprises a service key for identifying whether or not to allow the terminal to access a specific IN service, and in that the detect message comprises the service key. In case that the first network comprises multiple IN services, the service key which is associated with the terminal can be applied to determine which of the IN services are available to the terminal.

Advantageously, the prefix comprises a home network identification number and an IN service type identification number. In this manner, the IN service can be easily accessed, as the access number can be directed to the home network in a simple manner via the home network identification number and to the IN service requested via the IN service type identification number.

Advantageously, the method comprises the further steps of in the first SSF in the first network, receiving the access number, removing the home network identification number from the prefix comprised in the access number, determining the type of IN service to be accessed by reading the IN service type identification number comprised in the prefix, and directing the call to a servicing SCF providing the IN service to be accessed. When the access number has been received in the first SSF in the first network, the home network identification number can be removed as the call has arrived in the correct network. Further, the type of IN service can be determined by reading the IN service type identification number, and as a result, the call can be directed to a servicing SCF, such as the first SCF which provides the IN service requested in the network.

Advantageously, the IN service type identification number is identical to an intra-network IN service type identification number. When the IN service type identification number is identical to an intra-network IN service type identification number (which number or prefix is applied when a terminal in the first network accesses an IN service in the first network), the method according to the invention makes use of the same number, or prefix for identifying the type of IN service as is used in an intra-network situation. Thus, determining the type of IN service to be accessed can be performed in a simple manner and requires little or no adaptations in the first SSF as existing mechanisms to determine the type of IN service based on the intra-network IN service type identification number can be applied.

Advantageously, the IN service comprises a private network service and the IN service type identification number comprises a private network identification number. In this manner, users of a private network service, such as a Mobile Virtual Private Network (MVPN) service, a Partner Subscription service or a so called Home&Office service can make use of this service in networks other than the network in which the service is residing, and thus can make use of private network services while roaming in a second network, such as for example during a business travel to an other country.

Advantageously, the detect message complies to a customised application for mobile network enhanced logic (CAMEL) standard and the subscriber IN service access information comprises an Original CAMEL Subscription Information (OCSI). When the detect message and the subscriber IN service access information are based on standardised, known protocols, little or no modifications in the second SSF in the second network and in the VLR in the second network are required. Consequently, the method according to the invention can be implemented quickly, as further only modifications in the first network, such as in the first SCF are required.

Further, the invention comprises a computer program comprising a set of computer programs comprising program instructions causing the second SCF in the first network and the second SSF in the second network, in co-operation with each other, to perform the method according to the invention. The computer program can be stored in a computer memory, such as a RAM memory or stored on a record medium such as a CD-ROM or any other suitable carrier.

Further advantages of the invention will become clear from the appended drawing, showing a non-limiting embodiment of the invention, in which:
Fig. 1 shows a highly schematic diagram of a first network and a second network for implementing the method according to the invention; and
Fig. 2 shows a number sent from a terminal and an access number according to the invention.

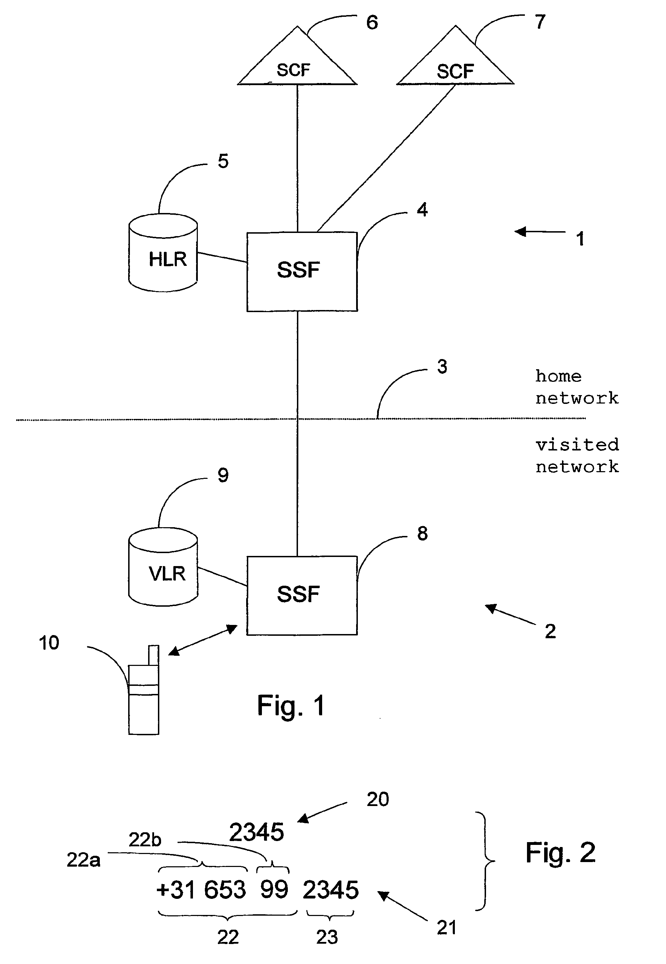

Fig. 1 shows a first network, in this example a home network 1, and a second network, in this example a visited network 2. The home network 1 and the visited network 2 are schematically separated by a dotted line 3. The home network 1 comprises a first service switching function (SSF) 4 providing switching functions in the home network 1. Further, the home network 1 comprises a home location register (HLR) 5 which is connected to the first SSF 4. The HLR 5 comprises subscriber data related to terminal subscribed to the home network 1. Further, the home network comprises a first service control function (SCF) 7 connected to the SSF 4, and a second SCF 6, also connected to the SSF 4. The visited network 2 comprises a second SSF 8 for providing switching functions in the visited network 2. Further, the visited network 2 comprises a visitor location register (VLR) 9 comprising subscription data related to terminals which are registered or roaming in the visited network 2, and which are subscribed to an other network, such as the home network 1. The VLR 9 is connected to the second SSF 8. Fig. 1 further shows a terminal 10, such as a mobile terminal in case that the home network 1 and/or the visited network 2 comprises a mobile network. The terminal 10 is subscribed to the home network 1.

When the terminal 10 registers on the visited network 2, for example when the terminal 10 enters the visited network 2 or when the terminal 10 is switched on in the visited network 2, subscription data from the HLR 5 in the home network 1 is sent to the VLR 9 in the visited network 2. The subscription data comprises an original CAMEL subscription information (OCSI) which comprises information for the visited network 2 to determine if the terminal 10 is allowed access to IN services in the home network 1, and to which IN services. When the terminal attempts to access an IN service in the home network 1, for example by sending a short number, this request is received in the second SSF 8 in the visited network. The SSF 8 now sends, based on the data comprised in the OCSI comprised in the VLR 9, a detect message to the SCF 6 in the home network 1. This detect message comprises the number sent from the terminal 10, an extension number of the terminal 10 and a service key. The service key, which forms part of the OCSI stored in the VLR 9 in the visited network, comprises data to determine the type of IN service as well as, in case that multiple profiles are available within the respective IN service, the appropriate profile. The detect message comprises an initial detection point (IDP) message according to the CAMEL standard. The SCF 6 in the home network 1, which receives the detect message, determines a prefix to the number sent from the terminal 10. The SCF 6 now sends a redirect message to the SSF 8 in the visited network 2, the redirect message comprises a destination number comprising the number sent from the terminal 10 and the prefix added by the SCF. The service key, the number sent by the terminal (10), and/or the extension number of the terminal are used to determine the type and, if available, profile of the IN service requested by the terminal (10), and thus to determine the destination number, associated with the IN service to be accessed. Further, the redirect message comprises a command to establish a connection. The SSF 8 in the visited network 2 establishes a connection in response to the redirect command received from the SCF 6, making use of the destination number including the prefix which has been sent by the SCF 6, comprised in the redirect message. In Fig. 2 a short number 20 sent from the terminal 10 and an access number 21 are shown. The access number 21 in this example equals the destination number and thus comprises the number 20 sent from the terminal 10 and the prefix 22. The prefix 22 comprises a home network identification number 22a and an IN service type identification number 22b. When the access number 21 is dialed by the SSF 8 in the visited network 2, the call is directed to the home network 1 by the home network identification number 22a which causes the call to be directed to the SSF 4 or to another SSF (not shown, but performing a similar task) in the home network 1. As the call, originating from the visited network 2 has now arrived in the home network 1, the home network identification number 22a can be removed from the access number 21. Now, the SSF 4 in the home network 1 determines the type of IN service from the IN service type identification number 22b comprised in the prefix 22. Dependent on the IN service type identification number 22b, the SSF 4 in the home network 1, now directs the call to a SCF which performs the IN function requested such as in this example the SCF 7. As a result, a number is sent from the SSF 4 to the SCF 7 in the home network 1, which number is identical to a number received by the SCF 7 originating from a request for the respective IN service from a terminal in the home network 1.

In case that multiple services are available in the home network 1, the SSF 4 in the home network 1 can direct the number to an appropriate SCF, based on the IN service type identification number 22b, comprised in the prefix. In this manner it is possible to provide multiple IN services to the terminal 10 roaming in the visited network 2. The IN service can for example be a MVPN service thus enabling the terminal 10 to access MVPN services provided by the home network 1, via the visited network 2.

The method according to the invention can make use of the CAMEL standard for sending data from the HLR 5 to the VLR 9 as well as for sending the detect message from the SSF 8 to the SCF 6. In this case, the data sent from the HLR 5 to the VLR 9 can comprise OCSI data which is stored in the VLR 9 upon registration. The detect message can comprise a initial detection point (IDP) message being a message standardised in the CAMEL standard. If the visited network 2 supports this CAMEL standard few or no special provisions in the visited network 2 are required. Thus, modifications to the visited network are minimal or not required at all, in case that the visited network supports the CAMEL standard.

The functions of the various SCF in the home network 1, such as the SCF 6 and the SCF 7 can be implemented by different service control points, but also it is possible to combine two or more of these functions in a single service control point in the home network 1.

Thus, the terminal 10 roaming in the visited network 2 is allowed access to the IN service in the home network 1 by sending an IN service request detect message from the SSF 8 in the visited network 2 to the SCF 6 in the home network 1, followed by a message from the SCF 6 to the SSF 8, which comprises a prefix to the number sent from the terminal 10. The SSF 8 is now able to access the IN service by dialing the access number 21, which comprises the prefix 22 and the number 23 sent from the terminal 10. The prefix 22 comprises information required for the visited network 2 and the home network 1 to direct the call to an appropriate SCF, such as the SCF 7 of the home network, for providing the requested IN service.

## Claims

1. Method for accessing an intelligent network (IN) service implemented in a first telecommunication network (1) by a terminal (10), which roams in a second telecommunication network (2) which is coupled to the first network (1), the terminal (10) being subscribed to the first network (1), the first and the second networks comprising respectively a first (4) and a second (8) service switching function (SSF) for performing switching operations in respectively the first and the second network, the first network (1) further comprising a home location register (HLR) (5) for storing subscription data related to the terminal (10), and a first service control function (SCF) (7) providing at least part of the IN service, the second network (2) further comprising a visitor location register (VLR) (9) for storing subscription data related to the terminal (10) when roaming in the second network (2), **characterised in that** an IN service request number (2), sent from the terminal (10) and received in the second SSF (8) in the second network, the number (20) indicating a request for accessing the IN service, initiates the steps of:
- sending an IN service request detect message from the second SSF (8) to a second SCF (6) in the first network, based on the number (20);
- sending a redirect message from the second SCF (6) to the second SSF (8), the redirect message comprising a command to establish a connection and a destination number associated with the IN service to be accessed;
- accessing the IN service from the second SSF (8) by dialling an access number (21) comprising the destination number.

2. The method according to claim 1, **characterised in that** the destination number comprises a prefix (22) to the number (20) sent from the terminal (10).

3. The method according to claim 2, **characterised in that** the access number (21) is the destination number and **in that** the method further comprises the step of coupling in the second SCF (6) the prefix (22) to the number (20) sent from the terminal (10), the detect message further comprising the number (20) sent from the terminal (10).

4. The method according to any of the preceding claims, **characterised by** the step of prior to accessing the IN service, sending a message from the HLR (5) in the first network (1) to the VLR (9) in the second network (2), the message comprising a subscriber IN service access information.

5. The method according to claim 4, **characterised in that** the subscriber IN service access information comprises a service key for identifying whether or not to allow the terminal (10) to access a specific IN service, and **in that** the detect message comprises the service key.

6. The method according to any of claims 2 to 5, **characterised in that** the prefix (22) comprises a home network identification number (22a) and an IN service type identification number (22b).

7. The method according to claim 6, **characterised by** the further steps of in the first SSF (4) in the first network (1):
- receiving the access number (21);
- removing the home network identification number (22a) from the prefix (20) comprised in the access number (21);
- determining the type of IN service to be accessed by reading the IN service type identification number (22b) comprised in the prefix (22); and
- directing the call to a servicing SCF (7) providing the IN service to be accessed.

8. The method according to claim 6 or 7, **characterised in that** the IN service type identification number (22b) is identical to an intra-network IN service type identification number.

9. The method according to any of the preceding claims, **characterised in that** the IN service comprises a private network service and the IN service type identification number (22b) comprises a private network identification number.

10. The method according to any of the preceding claims, **characterised in that** the detect message complies to a customised applications for mobile network enhanced logic (CAMEL) standard and **in that** the subscriber IN service access information comprises an original CAMEL subscription information (OCSI).

11. A computer program comprising a set of computer programs each comprising program instructions causing the second SCF (6) in the first network (1) and the second SSF (8) in the second network (2), in co-operation with each other, to perform each of the steps of the method according to any of claims 1 to 10.

12. The computer program according to claim 11, stored in computer memory.

13. The computer program according to claim 11, stored on one or more record mediums.

## Patentansprüche

1. Verfahren zum Zugreifen auf einen Dienst eines intelligenten Netzes (IN), der in einem ersten Telekommunikationsnetz (1) durch ein Endgerät (10) implementiert wird, das in einem zweiten Telekommunikationsnetz (2) wandert, das mit dem ersten Telekommunikationsnetz (1) verbunden ist, wobei das Endgerät (10) im ersten Netz (1) Subskribiert ist, die ersten und zweiten Netze jeweils eine erste (4) und eine zweite (8) Dienstevermittlungsfunktion (SSF) zum Durchführen von Vermittlungsvorgängen im ersten beziehungsweise zweiten Netz umfassen, das erste Netz (1) ferner ein Heimatregister (HLR) (5) zum Speichern von Subskriptionsdaten in Bezug auf das Endgerät (10) und eine erste Dienstesteuerungsfunktion (SCF) (7) umfasst, die wenigstens einen Teil des IN-Dienstes bereitstellt, und das zweite Netz (2) ferner ein Besucherregister (VLR) (9) zum Speichern von Subskriptionsdaten in Bezug auf das Endgerät (10) umfasst, wenn es im zweiten Netz (2) wandert, **dadurch gekennzeichnet, dass** eine IN-Dienstanforderungsnummer (20), die vom Endgerät (10) gesendet und in der zweiten SSF (8) im zweiten Netz empfangen wird, wobei die Nummer (20) eine Anforderung für einen Zugriff auf den IN-Dienst anzeigt, die folgenden Schritte einleitet:
- **Senden einer** IN-Dienstanforderungs-Erkennungsnachricht von der zweiten SSF (8) an eine zweite SCF (6) im ersten Netz basierend auf der Nummer (20);
- Senden einer Weiterleitungsnachricht von der zweiten SCF (6) an die zweite SSF (8), wobei die Weiterleitungsnachricht einen Befehl zur Herstellung einer Verbindung und eine Zielnummer umfasst, die dem IN-Dienst zugeordnet ist, auf den Zugriff erfolgen soll;
- Zugreifen auf den IN-Dienst von der zweiten SSF (8) durch Wählen einer Zugriffsnummer (21), welche die Zielnummer umfasst.

2. Verfahren nach Anspruch 1, **dadurch gekennzeichnet, dass** die Zielnummer eine Vorsatzkennung (22) für die vom Endgerät (10) gesendete Nummer (20) umfasst.

3. Verfahren nach Anspruch 2, **dadurch gekennzeichnet, dass** die Zugriffsnummer (21) die Zielnummer ist, und **dadurch**, dass das Verfahren ferner den Schritt des Koppelns in der zweiten SCF (6) der Vorsatzkennung (22) mit der vom Endgerät (10) gesendeten Nummer (20) umfasst, wobei die Erkennungsnachricht ferner die vom Endgerät (10) gesendete Nummer (20) umfasst.

4. Verfahren nach einem der vorhergehenden Ansprüche, **gekennzeichnet durch** den Schritt vor dem Zugreifen auf den IN-Dienst des Sendens einer Nachricht vom HLR (5) im ersten Netz (1) an das VLR (9) im zweiten Netz (2), wobei die Nachricht Teilnehmer-IN-Dienstzugriffsinformationen umfasst.

5. Verfahren nach Anspruch 4, **dadurch gekennzeichnet, dass** die Teilnehmer-IN-Dienstzugriffsinformationen einen Dienstschlüssel zum Identifizieren umfassen, ob dem Endgerät (10) der Zugriff auf einen spezifischen IN-Dienst gewährt werden soll oder nicht, und **dadurch**, dass die Erkennungsnachricht den Dienstschlüssel umfasst.

6. Verfahren nach einem der Ansprüche 2 bis 5, **dadurch gekennzeichnet, dass** die Vorsatzkennung (22) eine Heimatnetz-Identifikationsnummer (22a) und eine IN-Diensttyp-Identifikationsnummer (22b) umfasst.

7. Verfahren nach Anspruch 6, **gekennzeichnet durch** die folgenden weiteren Schritte in der ersten SSP (4) im ersten Netz (1):
- Empfangen der Zugriffsnummer (21);
- Entfernen der Heimregister-Identifikationsnummer (22a) aus der in der Zugriffsnummer (21) enthaltenen Vorsatzkennung (20);
- Bestimmen des Typs von IN-Dienst, auf den der Zugriff erfolgen soll, **durch** Auslesen der in der Vorsatzkennung (22) enthaltenen IN-Diensttyp-Identifikationsnummer (22b); und
- Leiten des Rufs an eine versorgende SCF (7), die den IN-Dienst bereitstellt, auf den der Zugriff erfolgen soll.

8. Verfahren nach Anspruch 6 oder 7, **dadurch gekennzeichnet, dass** die IN-Diensttyp-Identifikationsnummer (22b) identisch mit einer Netzinterne-IN-Diensttyp-Identifikationsnummer ist.

9. Verfahren nach einem der vorhergehenden Ansprüche, **dadurch gekennzeichnet, dass** der IN-Dienst einen Privatnetzdienst umfasst, und die IN-Diensttyp-Identifikationsnummer (22b) eine Privatnetz-Identifikationsnummer umfasst.

10. Verfahren nach einem der vorhergehenden Ansprüche, **dadurch gekennzeichnet, dass** die Erkennungsnachricht einen CAMEL-Standard (Customized Applications for Mobile Network Enhanced Logic) entspricht, und **dadurch**, dass die Teilnehmer-IN-Dienstzugriffsinformationen ursprüngliche CAMEL-Subskriptionsinformationen (OCSI) umfassen.

11. Computerprogramm, welche ein Satz von Computerprogramme umfasst, wobei jeder Programm Programminstruktionen umfasst, die den zweiten SCF (6) im ersten Netz (1) und der zweiten SSF (8) im zweiten Netz (2), in Zusammenarbeit mit einander, jeder der Schritte des Verfahrens einem der Anspruche 1 bis 10 durch führen lassen.

12. Computerprogramm nach Anspruch 11, das in einem Computerspeicher gespeichert ist.

13. Computerprogramm nach Anspruch 11, das auf einem oder mehreren Aufzeichnungsmedien gespeichert ist.

## Revendications

1. Procédé d'accès à un service de réseau intelligent (IN) implémenté dans un premier réseau de télécommunications (1) par un terminal (10), qui se déplace de manière itinérante dans un second réseau de télécommunication (2) qui est couplé au premier réseau (1), le terminal (10) étant abonné au premier réseau (1), le premier et le second réseaux comprenant respectivement une première (4) et une seconde (8) fonctions de commutation de service (SSF) pour effectuer des opérations de commutation dans respectivement le premier et le second réseau, le premier réseau (1) comprenant en outre un registre de localisation d'origine (HLR)(5) pour mémoriser des données d'abonnement relatives au terminal (10), et une première fonction de commande de service (SCF) (7) fournissant au moins une partie du service IN, le second réseau (2) comprenant en outre un registre de localisation visiteur (VLR)(9) pour mémoriser des données d'abonnement relatives au terminal (10) quand il se déplace de manière itinérante dans le second réseau (2), **caractérisé en ce que** un numéro de demande de service IN (20), envoyé depuis le terminal (10) et reçu dans la seconde SSGF (8) dans le second réseau, le numéro (20) indiquant une demande d'accès au service IN, amorce les étapes consistant à :
- envoyer un message de détection de demande de service IN depuis la seconde SSF (8) vers une seconde SCF (6) dans le premier réseau, sur la base du numéro (20) ;
- envoyer un message de redirection de la seconde SCF (6) à la seconde SSF (8), le message de redirection comprenant une commande afin d'établir une connexion et un numéro de destination associé au service IN à accéder ;
- accéder au service IN depuis la seconde SSF (8) en composant un numéro d'accès (21) comprenant le numéro de destination.

2. Procédé selon la revendication 1, **caractérisé en ce que** le numéro de destination comprend un préfixe (22) au numéro (20) envoyé depuis le terminal (10).

3. Procédé selon la revendication 2, **caractérisé en ce que** le numéro d'accès (21) est le numéro de destination et **en ce que** le procédé comprend en outre l'étape de couplage dans la seconde SCF (6) du préfixe (22) et du numéro (20) envoyé depuis le terminal (10), le message de détection comprenant en outre le numéro (20) envoyé depuis le terminal (10).

4. Procédé selon une quelconque des revendications précédentes, **caractérisé par** l'étape antérieure à l'accès au service IN, d'envoi d'un message depuis le HLR (5) dans le premier réseau (1) vers le VLR (9) dans le second réseau (2), le message comprenant une information d'accès au service IN d'abonné.

5. Procédé selon la revendication 4, **caractérisé en ce que** l'information d'accès au service IN d'abonné comprend une clé de service pour identifier su ou non permettre au terminal (10) d'accéder à un service IN spécifique, et **en ce que** le message de détection comprend la clé de service.

6. Procédé selon une quelconque des revendications 2 à 5, **caractérisé en ce que** le préfixe (22) comprend un numéro d'identification de réseau de rattachement (22a) et un numéro d'identification de type de service IN (22b).

7. Procédé selon la revendication 6 **caractérisé par** les étapes supplémentaires consistant à dans la première SSF (4) dans le premier réseau (1) :
- recevoir le numéro d'accès (21) ;
- supprimer le numéro d'identification de réseau de rattachement (22a) du préfixe (20) compris dans le numéro d'accès (21) ;
- déterminer le type de service IN à accéder en lisant le numéro d'identification de type de service IN (22b) compris dans le préfixe (22) ; et
- diriger l'appel vers une SCF de desserte (7) fournissant le service IN à accéder.

8. Procédé selon la revendication 6 ou 7, **caractérisé en ce que** le numéro d'identification de type de service IN (22b) est identique à un numéro d'identification de type de service IN intra-réseau.

9. Procédé selon une quelconque des revendications précédentes, **caractérisé en ce que** le service IN comprend un service de réseau privé et le numéro d'identification de type de service IN (22b) comprend un numéro d'identification de réseau privé.

10. Procédé selon une quelconque des revendications précédentes, **caractérisé en ce que** le message de détection se conforme à une norme d'applications personnalisées pour logique améliorée de réseau mobile (CAMEL) et **en ce que** l'information d'accès au service IN d'abonné comprend une information d'abonnement CAMEL d'origine (OCSI).

11. Programme informatique comprenant un ensemble de programmes informatiques comprenant chacun des instructions de programme amenant la seconde SCF (6) dans le premier réseau (1) et la seconde SSF (8) dans le second réseau (2), en coopération l'une avec l'autre, à effectuer chacune des étapes du procédé selon une quelconque des revendications 1 à 10.

12. Programme informatique selon la revendication 11, mémorisé dans une mémoire informatique.

13. Programme informatique selon la revendication 11, mémorisé sur un ou plusieurs supports d'enregistrement.
